Europäisches Patentamt

European Patent Office

Office européen des brevets

(19)

(11) Veröffentlichungsnummer: **0 153 426**
**B1**

(12) **EUROPÄISCHE PATENTSCHRIFT**

(45) Veröffentlichungstag der Patentschrift: **17.05.89**

(51) Int. Cl.⁴: **A 47 B 47/04, F 16 B 12/12**

(21) Anmeldenummer: **84101959.9**

(22) Anmeldetag: **24.02.84**

(54) **Regal mit steckbaren Knotenpunktverbindungen.**

(43) Veröffentlichungstag der Anmeldung:
**04.09.85 Patentblatt 85/36**

(45) Bekanntmachung des Hinweises auf die
Patenterteilung:
**17.05.89 Patentblatt 89/20**

(84) Benannte Vertragsstaaten:
**AT BE CH DE FR GB IT LI LU NL SE**

(56) Entgegenhaltungen:
**DE-U-7 516 704**
**FR-A- 457 259**
**FR-A-2 526 647**
**GB-A- 147 332**
**US-A-3 329 473**

(73) Patentinhaber: **Liebich, Max**
**Bürgerholzring 9**
**D-8370 Regen (DE)**

(72) Erfinder: **Liebich, Max**
**Bürgerholzring 9**
**D-8370 Regen (DE)**

(74) Vertreter: **Koch, Günther, Dipl.-Ing. et al**
**Kaufingerstrasse 8 Postfach 920**
**D-8000 München 2 (DE)**

## Beschreibung

Die Erfindung bezieht sich auf ein Regal der im Oberbegriff des Patentanspruchs 1 angegebenen Gattung. Ein derartiges Regal ist aus der DE—U—75 16 704.3 bekannt. Es läßt sich ohne getrennt herzustellende Knotenpunktverbinder durch einfaches Zusammenstecken der Endabschnitte der Querträger mit den Säulenelementen in vielen Kombinationen aufbauen. Die Regale können als Verkaufs- oder Ausstellungsturm, aber auch als Kleinmöbel im privaten Bereich Anwendung finden. In jedem Falle ist es dem Benutzer leicht möglich, die einzelnen Teile in der von ihm gewünschten Kombination zusammenzufügen. Zum Versand können die einzelnen Teile raumsparend flach zusammengelegt werden.

Durch die zum Zusammenstecken erforderlichen Einschnitte am Endabschnitt der bretterartig ausgebildeten Querträger wird der Endabschnitt benachbart zum Einschnitt geschwächt, und es besteht die Gefahr, daß bei unsachgemäßer Handhabung und Verkantung der Teile beim Zusammenbau und insbesondere bei der Demontage die neben den Einschnitten stehenden, für die Stabilität des Aufbaus erforderlichen Zungen abbrechen.

Um die Gefahr des Abbrechens zu vermeiden stehen bei dem bekannten Regal die Endabschnitte der Querträger über den Säulenquerschnitt nach außen vor. Aber auch hierdurch konnte das Abbrechen nicht völlig verhindert werden, weil auch hier die Bruchlinie in Faserlängsrichtung verläuft.

Die GB—A—147 332 zeigt eine Zapfenverbindung für die Holzrahmen für Verpackungskisten oder dergleichen, bei der an den Eckverbindungen oder den T-Verbindungen Blechstreifen U-förmig über die Verbindungsstelle gelegt und vernietet sind. Diese Blechstreifen dienen jedoch zur Verstärkung der Gesamtverbindung, nicht aber zur Verstärkung der Holzteile selbst.

Der Erfindung liegt die Aufgabe zugrunde, das gattungsgemäße Regal derart zu verbessern, daß die Gefahr des Bruchs der Endabschnitte der Querträger bei der Demontage, bei der Montage und bei der Benutzung beseitigt ist.

Gelöst wird die gestellte aufgabe durch die im Kennzeichnungsteil des Patentanspruchs 1 angegebenen Merkmale.

Diese Blech- oder Kunststoffteile verstärken die Endabschnitte im Bereich der zu erwartenden höchsten Biegemomente und entlasten die Endabschnitte der Querträger von diesen Biegemomenten, so daß ein Abbrechen nicht mehr zu befürchten ist. Außerdem wird durch diese Art der Verbindung erreicht, daß Blech bzw. Kunststoff mit dem Holz in den Kreuzschlitzen in Gleitberührung kommt.

Hierdurch wird es gemäß Anspruch 2 sogar möglich, die Enden der Querträger in den Säulenquerschnitt an den Knotenpunkten zurückzuversetzen, so daß nur der Rücken der Bleche sichtbar bleibt, der bündig mit der Oberfläche der Säulen abschließen kann und dadurch einen optisch ansprechenden Eindruck erweckt. Auch ist beim Vorübergehen ein Hängenbleiben mit der Kleidung an übestehenden Endabschnitten ausgeschlossen.

Die Blechkappen, Blechstreifen oder Blechplatten können maschinell in großen Stückzahlen billig hergestellt werden, so daß der Hergestellungspreis hierdurch nicht wesentlich erhöht wird. Die Bleche können entweder aufgeklebt, genietet, genagelt, verschraubt oder mit ausgestanzten Spritzen angedrückt werden. Die mit den Verstärkungen versehenen Querbretter können haltbar in die Schlitze bzw. Einschnitte eingesteckt werden, und sie können auf einfache Weise beim Auseinandernehmen des Regals wieder herausgezogen werden, ohne daß ein Abbrechen der Zungen benachbart zu den Einschnitten zu befürchten wäre.

Weitere Ausgestaltungen der Erfindung ergeben sich aus den Unteransprüchen, die auf die Ausführungsbeispiele gerichtet sind. Bei diesen sind die Bleche jeweils in Verlängerung der Endabschnitte der Querträger festgelegt und gleiten an den Schlitzwänden der Kreuzschlitze der Säulenelemente. Es soll für die Erfindung auch vorbehalten bleiben, die Verstärkungseinlagen in den Querschnitt der Querbretter und/oder gegebenenfalls in die Säulen benachbart zu den Schlitzen einzufügen, wenn beispielsweise der durchgehende Holzverlauf nicht optisch gestört werden soll.

Nachstehend werden Ausführungsbeispiele der Erfindung anhand der Zeichnung beschrieben. In der Zeichnung zeigen:

Fig. 1 eine perspektive Ansicht eines erfindungsgemäß ausgebildeten Regals;

Fig. 2 eine perspektive auseinandergezogene Darstellung der ineinander in die Säulenelemente steckbaren Querträger;

Fig. 3 einen Horizontalschnitt einer Knotenpunktverbindung in einer abgewandelten Ausführungsform;

Fig. 4 bis 6 in horizontalen Schnittansichten weitere abgewandelte Ausführungsbeispiele von Knotenpunktverbindungen und

Fig. 7 eine Ansicht der Knotenpunktverbindung nach Fig. 6 in Richtung des Pfeiles VII in Fig. 6 betrachtet.

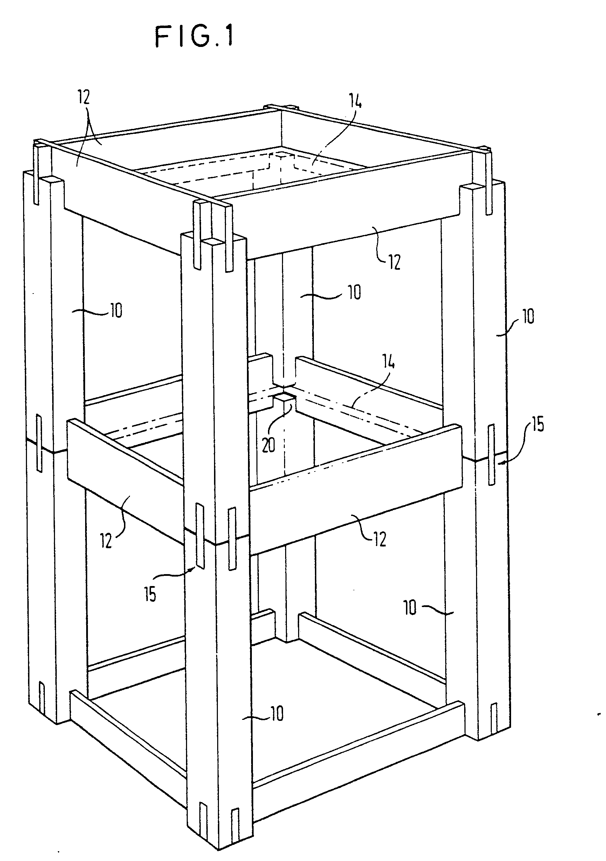

Jedes Regal ist aus Säulenelementen (10), Querträgern (12) und Fachböden (143) aufgebaut. Die Säulenelemente (10) sind miteinander und mit den die Queraussteifung bildenden Querträgern (12) über Knotenpunktverbindungen (15) steckbar. Die Regale können aus den Elementen in unterschiedlichen Höhen- und Breiten- bzw. Tiefenabmessungen hergestellt werden, wobei an den Knotenpunktverbindungen (15) nicht nur, wie in Fig. 1 dargestellt, jeweils zwei Querträger abgehen können, sondern auch drei oder vier Querträger, je nach dem Kombinationsaufbau.

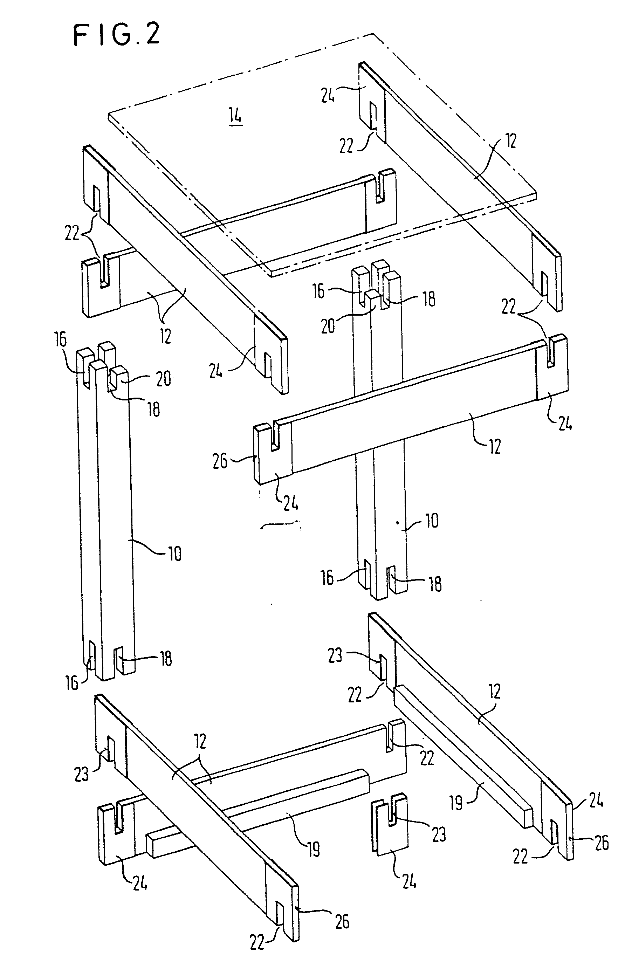

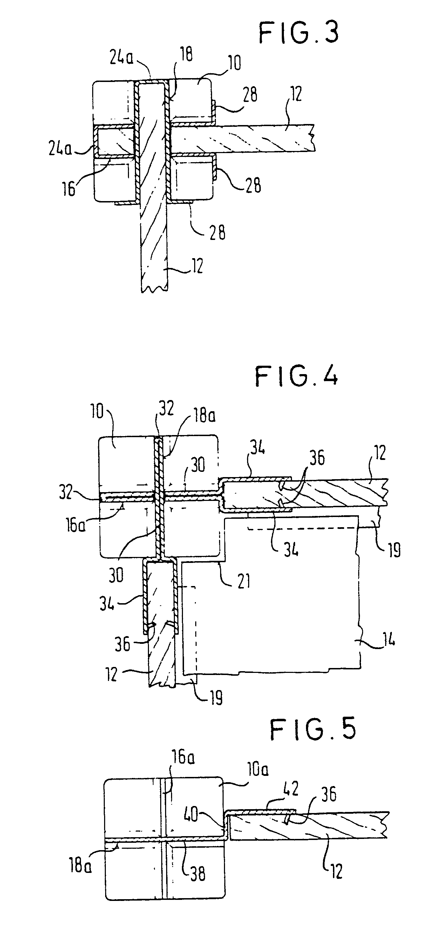

Jedes Säulenelement (10) ist in seiner Länge entsprechend der Höhe einer Fachetage bemessen. Die Säulenelemente weisen an ihren Stirnenden einen Kreuzschlitz auf, dessen Schlitze (16, 18) gemäß den dargestellten Ausführungsbeispielen senkrecht aufeinander stehen. Sie können jedoch auch in anderen Winkeln überkreuzend angeordnet sein. Durch den Kreuzschlit werden view Zapfen gebildet, von denen er innere Zapfen (20) in der Höhe zurückversetzt ist und als Auflage für die Ecke eines Fachbodens (14) dient. Die Zapfen können jedoch auch gleich lang sein und stirnseitig aneinander stoßen, wenn—wie aus Fig. 2 und 4 ersichtlich—Auflageleisten (19) an den Innenseiten der Querträger (12) vorgesehen sind, auf denen die Fachböden (14) aufliegen, die in diesem Falle einen Eckausschnitt (21) aufweisen.

Die brettartig ausgebildeten Querträger (12) sind an ihren beiden Endabschnitten mit über die halbe Höhe reichenden Einschnitten (22) versehen, die ineinander steckbar sind und im ineinandergesteckten Zustand einen stabilen Rahmen bilden.

Die Einschnitte (22) bilden Schwächungsstellen, die beim Ineinanderstecken und insbesondere beim Auseinanderziehen bis zum Bruch beansprucht werden können. Diese Hauptbeanspruchungslinien verlaufen vom Grund der Einschnitte (22) seitlich nach außen. Zur Vermeidung des Abbrechens der seitlich an die Einschnitte (22) anschließenden Zungen sind Verstärkungen aus Blech oder Kunststoff vorgesehen. Gemäß dem Ausführungsbeispiel nach den Figuren 1 bis 3 besteht die Verstärkung aus U-förmig gebogenen Blechkappen (24), die die beiden Endabschnitte der Querträger (12) umschließen und diese sind mit Einschnitten (23) ausgestattet, die auf die Einschnitte (22) ausgerichtet sind, so daß das Ineinanderstecken der Querträger (12) an ihren Enden nicht behindert ist. Die Querträger (12) können in ihren Endabschnitten in der Dicke um die Blechstärke vermindert sein, so daß die äußere Oberfläche der Bleche mit der Oberfläche der Querträger fluchtet. Dies erfordert jedoch zusätzliche Arbeitsgänge und schwächt die Endabschnitte der Querträger, so daß die Blechkappen (24) vorzugsweise über die ungeschwächten Endabschnitte der Querbretter geschoben und hier durch Klemmsitz oder durch Kleben, Nieten, Nageln, Schrauben oder ausgestanzte Spitzen befestigt werden. Die Kreuzschlitze (16 und 18) sind in ihrer Breit so bemessen, daß die Querträger (12) mit den sie umschließenden Blechkappen eingeschoben werden können. Durch die Bleche wird es möglich, die Endabschnitte der Querträger (12) insgesamt in den Querschnitt der Säulenelemente (10) einzubeziehen, so daß sich an den Knotenpunkten keine seitlich nach außen vorstehenden Teile ergeben. Die durch den Rücken der Blechkappen (24) definierte Stirnfläche (26) der Querträger (12) kann mit den Seitenwänden der Säulenelemente (10) fluchten.

Bei den Ausführungsbeispielen nach Fig. 1 und 2 liegen die Blechkappen (24) insgesamt innerhalb des Säulenquerschnitts. Bei dem Ausführungsbeispiel nach Fig. 3 sind die Blechkappen verlängert und in dem aus dem Säulenquerschnitt innen vorstehenden Abschnitt zu Flanschen (28) nach außen gebogen, die der Säule anliegen und eine weitere Verstärkung des Knotenpunktaufbaus ergeben.

Bei den Ausführungsbeispielen nach den Figuren 1 bis 3 liegen die durch Blechkappen (24) verstärkten Enden der Querträger innerhalb des Säulenquerschnittes. Bei den Ausführungsbeispielen nach Fig. 4 bis 7 erfolgt demgegenüber die Knotenpunktverbindung über Blechabschnitte, die an den zurückversetzten Querträgen (12) befestigt sind. Daher sind die Kreuzschlitze (16a, 18a) in den Stirnenden der Säulenelemente (10) entsprechend der Blechstärke schmaler gehalten. Aus fabrikatrischen Gründen sollten diese Schlitze jedoch eine Breite von 2 mm nicht unterschreiten, und andererseits sollte aus bearbeitungstechnischen Gründen das Blech eine Dicke von weniger als 2 mm aufweisen. Um dennoch einen sicheren Reibungsschluß zu gewährleisten, ist gemäß dem Ausführungsbeispiel nach Fig. 4 das Verstärkungsblech über eine Falzkante (32), die an der Außenseite der Säule zu liegen kommt, zu einem Doppelblech (30) gebogen, welches innerhalb des Kreuzschlitzes (18a, bzw. 16a) zu liegen kommt. Diese Doppelblech ist außerhalb des Säulenquerschnitts U-förmig gebogen, wobei die äußeren Flansche (34) die Enden der Querträger (12) umgreifen und an diesen durch ausgestanzte Spitzen (36) festgelegt sind. Die innerhalb des Säulenquerschnitts im Knotenpunkt einander überkreuzenden Doppelbleche (30) sind mit in der Zeichnung nicht ersichtlichen Einschnitten versehen, die den Einschnitten (22) entsprechen und ein Ineinanderstecken gewährleisten.

Bei dem Ausführungsbeispiel nach Fig. 5 ist ein einziger Blechstreifen (38) vorgesehen, der im Mittelabschnitt mit Einschnitten entsprechend den Einschnitten (22) versehen ist und in einen entsprechenden Blechstreifen (38) innerhalb des Kreuzschlitzes (16a, 18a) einsteckbar ist. Dieser Blechstreifen (38) ist gemäß dem Ausführungsbeispiel nach Fig. 5 mit einer stufenförmigen Abkröpfung (40) versehen, und der freie Flansch (42) des Blechstreifens ist mittels Spitzen (36) auf der Außenseite des Querträgers derart festgelegt, daß dieser etwa in der Mitte der Säule an diese bzw. die Abkröpfung anstößt. Der Blechstreifen könnte auch gerade ausgebildet sein, wobei die Querträger weiter außen oder weiter innen zu liegen kämen.

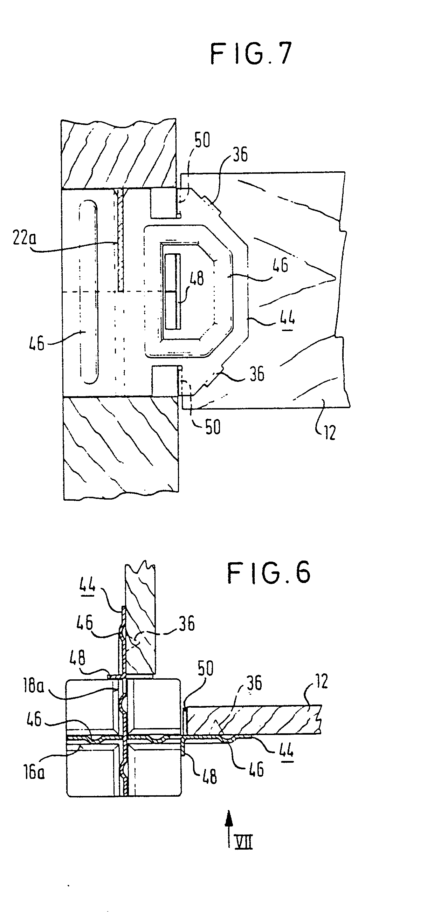

Bei dem Ausführungsbeispiel nach Fig. 6 und 7 finden als Verstärkung relativ dünnwandige Bleche (44) Verwendung, die zur Aussteifung und Festlegung innerhalb der Schlitze (16a, 18a) mit ausgeprägten Sicken (46) versehen sind. Zwei derartige Sicken (46) verlaufen symmetrisch zu einem Einschnitt (22a), über den die Bleche inernhalb der Schlitze (16a, 18a) ineinandergesteckt sind.

Die Bleche (44) sind mit ausgestanzten Spitzen (36) an den Querträgern festgelegt. Ausgestanzte und nach außen abgebogen Lappen (48) liegen in zusammengestecktem Zustand einer Säulenseitenwand an. Weitere ausgestanzte und nach

der anderen Seite angebogene Lappen (50) liegen der Stirnseite der Querträger (12) an.

Um ein Einstecken der Endabschnitte der Querträger in die Kreuzschlitze der Säulen zu erleichtern, sind die offenen Enden der Schlitze divergierend ausgebildet, wodurch die Einführung erleichtert wird.

Gemäß den dargestellten Ausführungsbeispielen bestehen die Verstärkungen aus Metallblech. Es soll jedoch für die Erfindung vorbehalten bleiben, diese Verstärkungen aus Kunststoff geeigneter Zusammensetzung herzustellen.

**Patentansprüche**

1. Regal mit steckbaren Knotenpunktverbindungen zwischen Säulenelementen (10) und Querträgern (12), die je ein Querbrett aus Holz und zwei Endabschnitte aufweisen und die in Verbindung mit Fakhböden (14) in unterschiedlicher Höhe und Breite kombinierbar sind, wobei die Säulenelemente (10) stirnseitig mit Kreuzschlitzen (16, 18) versehen sind, in die die über Einschnitte (22, 23) ineinandergesteckten Endabschnitte einander überkreuzend einschiebbar sind, dadurch gekenzneichnet, daß die Endabschnitte der Querträger außen im Bereich der Kreuzschlitze Bleck- oder Kunststoff (24; 30; 38; 44) aufweisen oder von Blech oder Kunststoff gebildet sind.

2. Regal nach Anspruch 1, dadurch gekennzeichnet, daß die Stirnflächen (26) der Endabschnitte im zusammengesteckten Zustand mit der Oberfläche der Säulenelemente (10) fluchten.

3. Regal nach Anspruch 1, dadurch gekennzeichnet, daß auf die Endabschnitte der Querträger (12) U-förmig gebogenen Blechkappen (24) aufgesteckt sind.

4. Regal nach Anspruch 3, dadurch gekennzeichnet, daß die Bleche (24; 30; 34; 38; 44) durch Kleben, Nieten, Nageln, Verschrauben oder ausgestanzte Spitzen (36) an den Querträgern (12) befestigt sind.

5. Regal nach Anspruch 3, dadurch gekennzeichnet, daß die Blechkappe (24) im zusammengesteckten Zustand innerhalb des Säulenquerschnitts liegt.

6. Regal nach Anspruch 3, dadurch gekennzeichnet, daß die Blechkappe (24a) auf der Innenseite nach außen abgewinkelte Flansche (28) aufweist, die im zusammengesteckten Zustand einer Oberfläche der Säule (10) anliegen.

7. Regal nach Anspruch 1, dadurch gekennzeichnet, daß die Endabschnitte der Querträger aus Blechen bestehen, die innerhalb der Kreuzschlitze (16a, 18a) der Säulen einander über Einschnitte (23) überkreuzend angeordnet sind und mit ihrem aus dem Säulenquerschnitt vorstehenden Teil an den zurückversetzen Querträgern (12) festgelegt sind.

8. Regal nach Anspruch 7, dadurch gekennzeichnet, daß ein Blechstreifen längs eine Faltlinie (32) zu einem Doppelblech (30) gefaltet ist, welches innerhalb des Kreuzschlitzes (16a, 18a) liegt und außerhalb des Säulenquerschnitts zu U-förmigen Flanschen (34) abgekröpft ist, die den Endabschnitt der Querträger (12) umgreifen.

9. Regal nach Anspruch 7, dadurch gekennzeichnet, daß ein Blechstreifen (38) teilweise innerhalb des Kreuzschlitzes (16a, 18a) liegt und auf einer Seite des zurückversetzten Querträgers befestigt ist, und daß der Blechstreifen (38) außerhalb des Säulenquerschnitts gekröpft (40) ausgebildet ist.

10. Regal nach Anspruch 7, dadurch gekennzeichnet, daß die Endabschnitte der Querträger von Blechen (44) mit Versteifungssicken (46) gebildet sind, daß die Bleche (44) mit ausgestanzten und rechtwinklig abgebogenen Lappen (48, 50) versehen sind, die im gesteckten Zustand an der Außenseite der Säule bzw. der Stirnseite der Querträger (12) anliegen, und daß zwei in Säulenlängsrichtung verlaufende Sicken (46) im Blech (44) vorgesehen sind, zwischen denen parallel hierzu in der Mitte der Einsteckschlitz (22a) vorgesehen ist.

**Revendications**

1. Rayonnage à assemblages d'angle emboîtables entre des éléments de colonne (10) et des traverses (12) comprenant respectivement une planche transversale en bois et deux sections terminales et pouvant être assemblés en différentes hauteurs et largeurs, en combinaison avec des tablettes (14), les éléments de colonne (10) étant munis à la face frontale d'empreintes cruciformes (16, 18) dans lesquelles les sections terminales emboîtées par l'intermédiaire de mortaises (22, 23) peuvent être insérées en croix, caractérisé en ce que les sections terminales des traverses présentent à l'extérieur, dans la région des empreintes cruciformes, des garnitures en tôle ou en matière plastique (24; 30; 38; 44) ou qu'elles sont réalisées en tôle ou en matière plastique.

2. Rayonnage selon la revendication 1, caractérisé en ce que les faces frontales (26) des sections terminales sont alignées, à l'état emboîte, avec la surface des éléments de colonne (10).

3. Rayonnage selon la revendication 1, caractérisé en ce que des capuchons en tôle (24) pliés en U sont montés sur les sections terminales des traverses (12).

4. Rayonnage selon la revendication 3, caractérisé en ce que les tôles (24; 30; 34; 38; 44) sont fixées sur les traverses (12) par collage, rivetage, cloutage, vissage ou au moyen de pointes matricées (36).

5. Rayonnage selon la revendication 3, caractérisé en ce que, à l'état emboîté, le capuchon en tôle (24) se situe à l'intérieur de la section transversale de la colonne.

6. Rayonnage selon la revendication 3, caractérisé en ce que le capuchon en tôle (24a) présente sur la face intérieure des brides (28) coudées vers l'extérieur qui, à l'état emboîté, sont appliqués contre une face de la colonne (10).

7. Rayonnage selon la revendication 1, caractérisé en ce que les sections terminales des traverses sont réalisées en tôles qui, à l'interior de l'empreinte cruciforme (16a, 18a) des colonnes, sont disposées de façon à se croiser par l'intermédiaire de mortaises (23) et fixées, avec leur partie dépassant de la section transversale de la colonne, sur les traverses (12) ramenées en arrière.

8. Rayonnage selon la revendication 7, caractérisé en ce qu'une bande de tôle est pliée le long d'une ligne de pliage (32) en une tôle double (30) laquelle se situe à l'intérieur de l'empreinte cruciforme (16a, 18a) et est coudée, à l'extérieur de la section transversale de la colonne, en brides (34) en U qui entourent la section terminale des traverses (12).

9. Rayonnage selon la revendication 7, caractérisé en ce qu'une bande de tôle (38) se situe en partie à l'intérieur de l'empreinte cruciforme (16a, 18a) et est fixée sur l'une des faces de la traverse ramenée en arrière, et que la bande de tôle (38) présente un coude (40) à l'extérieur de la section transversale de la colonne.

10. Rayonnage selon la revendication 7, caractérisé en ce que les sections terminales des traverses sont constituées par des tôles (44) avec des moulures de renforcement (46), que les tôles (44) présentent des languettes (48, 50) matricées et pliées à angle droit lesquelles, à l'état emboîté, sont appliquées contre la face extérieure de la colonne et respectivement contre la face frontacle des traverses (12), et que la tôle (44) est munie de deux moulures (46) qui s'étendent dans la direction longitudinale de la colonne et entre lesquelles est prévue, au milieu et parallèlement à ces dernières, la fente d'emboîtement (22a).

## Claims

1. Shelf rack with interlocking corner joints between column elements (10) and transverse beams (12), which each comprise a transverse board of wood and two end portions and which can be combined in conjunction with partition floors (14) in various heights and widths, the column elements (10) being provided in their ends with cruciform slits (16, 18), into which the end portions, pushed one into another by cut-outs (22, 23), can be pushed crossing one another, characterized in that the end portions of the transverse beams possess, externally in the region of the cruciform slits, sheet metal or plastics (24; 30; 38; 44), or are formed of sheet metal or plastics.

2. Shelf rack according to Claim 1, characterized in that the end faces (26) of the end portions, when in the assembled state, are flush with the surface of the column elements (10).

3. Shelf rack according to Claim 1, characterized in that sheet metal caps (24), bent to a U-shape, are pushed onto the end portions of the transverse beams (12).

4. Shelf rack according to Claim 3, characterized in that the metal sheets (24; 30; 34; 38; 44) are secured to the transverse beams (12) by gluing, riveting, nailing, screwing or by stamped-out spikes (36).

5. Shelf rack according to Claim 3, characterized in that the sheet metal cap (24) lies, in the assembled state, inside the column cross-section.

6. Shelf rack according to Claim 3, characterized in that the sheet metal cap (24a) possesses, on the inner face, outwardly cranked flanges (28) which, in the assembled state, bear against a surface of the column (10).

7. Shelf rack according to Claim 1, characterized in that the end portions of the transverse beams are of metal sheets which, crossing one another by cut-outs (23), are disposed inside the cruciform slits (16a, 18a) of the columns and are secured to the set-back transverse beams (12) with their part projecting beyond the column cross-section.

8. Shelf rack according to Claim 7, characterized in that a sheet metal strip is folded along a fold line (32) to form a double sheet (30), which lies inside the cruciform slit (16a, 18a) and is cranked outside the column cross-section to U-shape flanges (34), which fit around the end portion of the transverse beams (12).

9. Shelf rack according to Claim 7, characterized in that a sheet metal strip (38) lies partly inside the cruciform slit (16a, 18a) and is secured to one face of the set-back transverse beam, and that the sheet metal strip (38) is formed cranked (40) outside the column cross-section.

10. Shelf rack according to Claim 7, characterized in that the end portions of the transverse beams are formed of metal sheets (44) having stiffening corrugations (46), that the sheets (44) are provided with stamped-out tongues (48, 50), bent to a right angle, which in the assembled condition bear against the outer face of the column and against the end face of the transverse beams (12) respectively, and that two corrugations (46), running in the longitudinal direction of the column, are provided in the metal sheet (44), between which the push-in slit (22a) is provided centrally and parallel thereto.

# FIG.1

# FIG.2

FIG.3

FIG.4

FIG.5

3

FIG.7

FIG.6